# FASCICULE DE BREVET EUROPEEN

(11) **EP 0 723 240 B1**
(45) Date de publication et mention de la délivrance du brevet: **06.04.2005**
(21) Numéro de dépôt: 96400124.2
(22) Date de dépôt: 18.01.1996
(51) Int. Cl.: G06F 17/60, G07F 17/32, G06K 7/08

(54) **Terminal à lecteur de carte et procédé de traitement multi-applicatif d'un tel terminal**
Terminal mit Kartenleser und Verfahren zur Verarbeitung von mehreren Anwendungen mit diesem Terminal
Terminal with card reader and multiple application processing method with this terminal

(30) Priorité: 23.01.1995 FR 9500722
(43) Date de publication de la demande: 24.07.1996
(73) Titulaire: FRANCE TELECOM, 75015 Paris (FR); LA POSTE, 92777 Boulogne Billancourt Cédex (FR)
(72) Inventeur: Petit, Stéphane, F-14470 Courseulles S/Mer (FR)
(74) Mandataire: Grynwald, Albert

(56) Documents cités:
- EP-A- 0 171 035
- WO-A-92/10806
- US-A- 4 764 666
- US-A- 4 839 504

## Description

### Domaine technique

La présente invention concerne un terminal lecteur de carte, une carte électronique et un procédé de traitement multi-applicatif d'un tel terminal.

### Etat de la technique antérieure

Les terminaux à lecteur de carte, connectés ou non à un centre distant de traitement de l'information, fixes ou mobiles, portables ou non, doivent accepter des cartes à mémoire de plus en plus diverses et par conséquent exécuter des applications de plus en plus variées.

Cet état impose au constructeur de terminal à lecteur de carte soit de prévoir un nombre d'applications important sur son terminal à lecteur de carte, avec le risque que chaque utilisateur n'en utilise qu'une faible partie, soit d'y implanter des systèmes d'extension de capacité de traitement d'applications, ce qui accroît son coût. Par souci de sécurité, le constructeur de terminaux à lecteur de carte doit aussi prévoir des mécanismes permettant de réaliser le cloisonnement des applications présentes sur le terminal à lecteur de carte, ce qui a également pour effet d'accroître le coût de ce terminal.

Pour pouvoir diffuser un terminal à lecteur de carte de façon massive, un constructeur de terminaux à lecteur de carte doit pouvoir mettre à disposition de son client un matériel à faible coût, permettant d'accéder à une multiplicité d'applications, ce qui est en contradiction avec le paragraphe précédent.

Les différentes solutions techniques que l'on peut apporter au traitement multi-applicatif d'un terminal à lecteur de carte sont les suivantes :

### Schéma de fonctionnement type des applications

L'automate du terminal à lecteur de carte lié à l'exécution d'une application est strictement le même quelle que soit l'application. Les fournisseurs d'applications calquent les scénarios de leurs applications sur cet automate. Ce système est peu souple.

### Téléchargement d'applications à distance

Le terminal à lecteur de carte dispose de mémoire qui est téléchargée auprès d'un centre de traitement de l'information distant. Cette solution impose la possession d'un terminal à lecteur de carte qui puisse être raccordé à un centre de traitement de l'information distant et qui possède des capacités de mémoire suffisantes pour accueillir de nouvelles applications. Ses capacités étant limitées, de nouveaux problèmes sur la gestion des applications présentes sur le terminal à lecteur de carte apparaissent: gestion de versions, téléchargement avant l'utilisation d'une application précise, ....

### Mémoire additive sur le téléphone à carte

On peut envisager de prévoir sur le terminal à lecteur de carte un emplacement pour accueillir une carte d'extension mémoire. Le fournisseur d'application pour exploiter son service, diffuse ses cartes d'extension que l'on insère dans le terminal à lecteur de carte lors de l'utilisation d'application concernée. L'utilisation de telles cartes n'empêche pas utilisation d'une carte à mémoire dédiée au service pendant l'exécution de l'application. On peut constater qu'avec une telle solution, le coût de mise en place d'un service est important. D'autre part, la fragilité des connecteurs ne permet pas l'échange systématique des cartes d'extension pour accéder à des service différents. Il faut alors envisager des regroupements de prestataires de services pour la conception et la diffusion des cartes d'extension.

### Chargement d'application en langage micro contenue dans la carte d'application

La carte application contient le programme de l'application utilisée. Ce programme est sous forme langage machine du terminal à lecteur de carte. Il est chargé dans le terminal à lecteur de carte avant l'utilisation de l'application. Cette solution nécessite la mise à disposition en quantité suffisante de mémoire programme (vive ou autre) sur le terminal à lecteur de carte pour charger le programme de l'application contenu dans la carte à mémoire. Le temps de chargement de ce programme applicatif peut être conséquent. De plus, il est difficilement envisageable d'obliger tous les industriels à doter leurs terminaux à lecteur de carte de microprocesseurs de la même famille ou compatibles.

### Chargement de programmes interprétés contenus dans la carte application

Le principe de fonctionnement est similaire à la solution précédente. Cependant le programme chargé de la carte à mémoire vers le terminal à lecteur de carte est écrit en langage interprété. Pour réaliser une application, il faut définir un langage interprété regroupant des fonctions de traitement et des fonctions d'entrées-sorties standards liées au terminal à lecteur de carte. Les inconvénients concernant la mise à disposition par le terminal à lecteur de carte de mémoire vive et la lenteur de chargement des programmes en provenance de la carte à mémoire existent toujours.

### Exemple de réalisation existante

Le problème de l'évolutivité du terminal à lecteur de carte a déjà été abordé sur un matériel de France Télécom, le "Lecam" (Lecteur de Carte à Mémoire). Celui-ci dispose de trois solutions distinctes pour garantir l'évolutivité. Ainsi, il peut :
- être téléchargé via le réseau Télétel par le serveur applicatif avec des programmes applicatifs qui sont exécutés après la réception d'ordres serveurs explicites. On peut remarquer que seuls les "Lecam" équipés de mémoire sauvegardée ou laissés sous tension conservent ces programmes téléchargés ;
- être téléchargé avec un programme contenu dans une carte après introduction de celle-ci. L'exécution du programme est commandée soit par le serveur applicatif, soit après l'insertion d'une carte à mémoire ;
- être modifié par changement de mémoire morte. Le programme est commandé soit à la mise sous tension, soit après l'insertion d'une carte à mémoire.

Dans tous les cas considérés ci-dessus les programmes sont écrits en langage interprété.

Un document de l'art antérieur, le brevet US-A-4 764 666, décrit un système de paris en ligne comprenant des terminaux qui sont reliés à un processeur de données central, et qui contrôlent l'acceptation et la validation d'entrée d'un joueur. Les entrées relatives aux joueurs, paiements, validation de jeu, et mémorisation d'informations concernant les identités et les statistiques sont contrôlées au moyen de cartes à mémoire. Chaque carte à mémoire comprend une mémoire et éventuellement un microprocesseur accédant à la mémoire et contrôlant la communication de données programmées. Chaque carte peut être chargée dans un terminal pour accomplir un transfert de données de la carte vers ce terminal et de ce terminal vers le processeur central. De même des communications en provenance du processeur central peuvent être dirigées vers un terminal puis vers une carte.

L'invention a pour objet une solution simple de mise en oeuvre qui permet à partir de terminaux à lecteur de carte banalisés de réaliser tout type d'application, que ce soit des applications utilisant une ou plusieurs cartes à mémoire ou non.

### Exposé de l'invention

La présente invention propose donc un procédé de traitement multi-applicatif d'un terminal à lecteur de cartes selon la revendication 1.

Dans le cas où l'ordre applicatif nécessite une réponse applicative, le terminal présente à la carte électronique un ordre entrant comprenant la réponse applicative qui fait office d'ordre applicatif d'interrogation pour la prochaine action applicative à exécuter. Dans le cas contraire, le terminal est toujours demandeur d'action applicative à réaliser à l'aide d'un ordre applicatif d'interrogation.

Cette solution résout par définition le problème du cloisonnement des applications.

Le champ d'application d'un tel procédé est très vaste puisque l'on peut l'utiliser pour des terminaux à lecteur de carte connectés ou non à un centre distant de traitement de l'information, fixes ou mobiles, portables ou non.

L'invention concerne également un terminal à lecteur de carte, à mémoire ou non, comportant notamment une unité centrale reliée avec plusieurs ensembles périphériques tels qu'un fichier, un clavier, un modem, un émetteur DTMF, un afficheur, un lecteur de carte ; en liaison avec au moins une carte électronique à mémoire ou non, dédiée à l'exécution d'une application.

### Brève description des dessins

- La figure 1 illustre une session d'échange selon le procédé de invention ;
- la figure 2 illustre un lecteur à lecteur de carte selon l'invention.

### Exposé détaillé de modes de réalisation

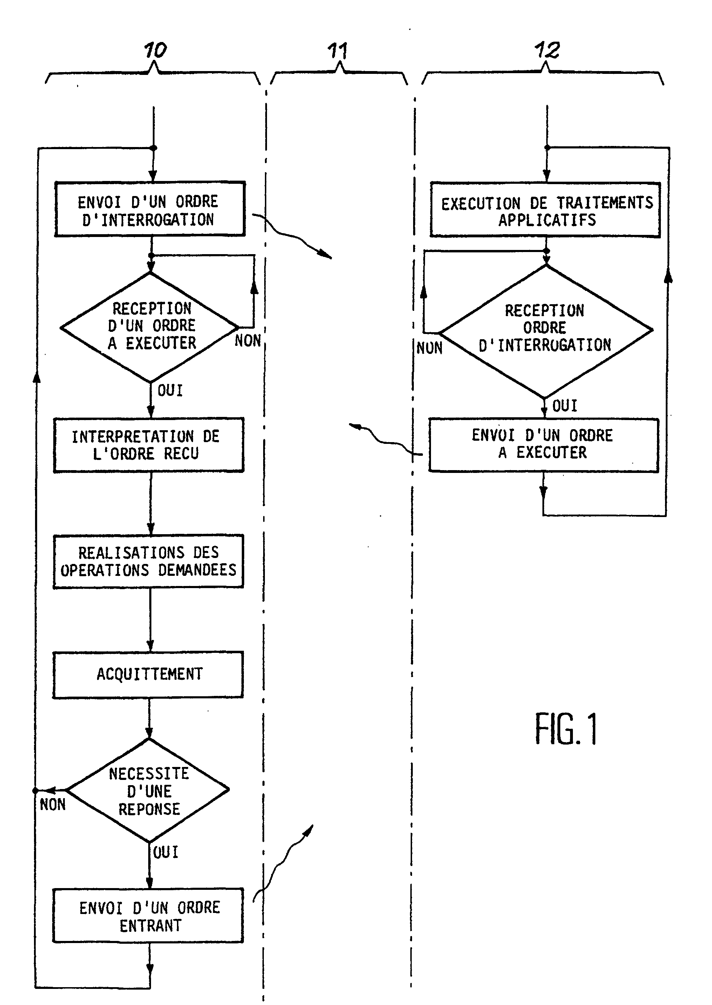

Le procédé de l'invention, illustré sur la figure 1, est un procédé de traitement multi-applicatif d'un terminal à lecteur de carte 10 en liaison 11 avec au moins une carte électronique, par exemple une carte à mémoire comprenant un microprocesseur 12, dans laquelle on implémente un programme lié à une application : on peut éventuellement dissocier le support de l'application qui est la carte à mémoire du support des données nécessaires à la réalisation de l'application, qui peut êre une autre carte à mémoire ou non (carte à piste magnétique par exemple).

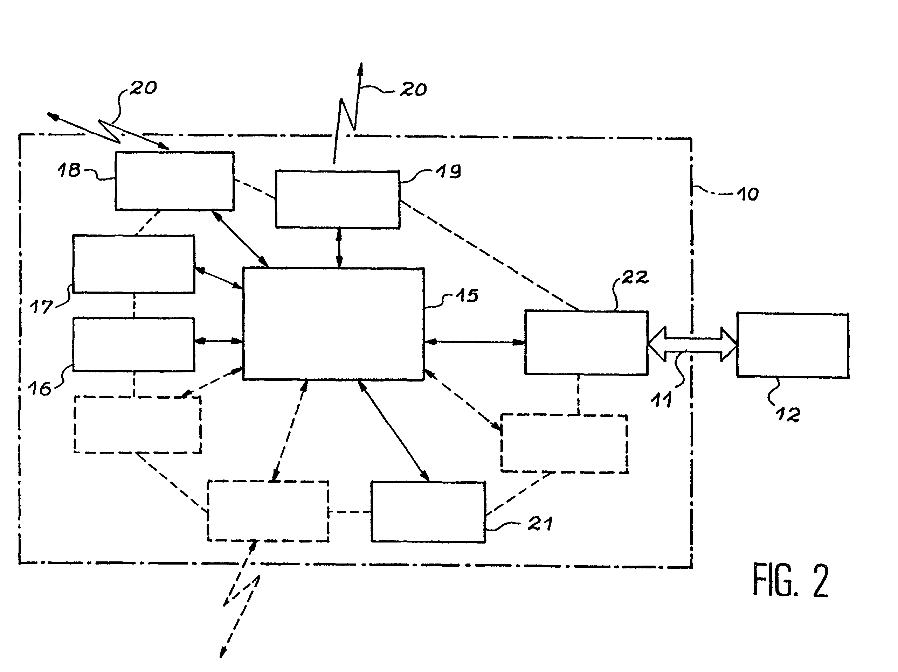

La figure 2 illustre un terminal à lecteur de cartes 10 selon l'invention en liaison 11 avec une carte application 12. Ce terminal 10 comprend une unité centrale interpréteur 15 en liaison avec plusieurs éléments périphériques tels que notamment un fichier 16, un clavier 17, un modem 18 et un émetteur DTMF 19 permettant des liaisons 20 avec l'extérieur, un afficheur 21, un lecteur de carte 22.....

La carte 12 exécute des traitements applicatifs et dialogue avec le terminal à lecteur de carte 10 pour la mise à disposition des entrées-sorties et des capacités du terminal. Le terminal à lecteur de carte 10 n'a plus besoin de mettre de la mémoire vive à la disposition de application. La phase de téléchargement n'existe plus. Les dispositions à prendre sont la définition des ordres entrées-sorties et la normalisation de ces ordres entre les fabricants de terminaux à lecteur de carte. Un prestataire de services désireux de construire une application, nécessitant de la sécurité ou non, peut élaborer et diffuser une carte associée à son ou ses services.

Dans une telle solution, illustrée sur la figure 1, le terminal à lecteur de carte 10 devient esclave, au niveau de l'applicatif, vis-à-vis de la carte 12 dans laquelle se déroule l'application, et le dialogue entre le terminal à lecteur de carte 10 et la carte 12 reste compatible avec la norme 7816-3.

A la remise à zéro, le type de carte 12 est déterminé par le terminal à lecteur de carte 10. Si la carte 12 est de type application, le terminal à lecteur de carte 10 présente à la carte 12, à l'aide d'un ordre entrant ISO (Organisation Internationale de Standardisation) 7816-3, un ordre applicatif d'interrogation, puis récupère à l'aide de deux ordres sortants ISO 7816-3, un ordre applicatif à exécuter. Les ordres applicatifs sont au format T (type), L (longueur), V (valeur). Le premier ordre sortant extrait les données T et L, le second extrait les données V.

Le mécanisme d'extraction de l'application de la carte 12 est ainsi enclenché. Le terminal à lecteur de carte 10 interprète les ordres applicatifs, réalise les opérations y attenant et les acquitte. Dans le cas où l'ordre applicatif nécessite une réponse applicative, le terminal à lecteur de carte 10 présente à la carte 12 un ordre entrant comprenant la réponse applicative au format TLV. Cette réponse fait office d'ordre applicatif d'interrogation pour l'action applicative suivante à exécuter. Dans le cas contraire, le terminal à lecteur de carte 10 est toujours demandeur d'une action applicative à réaliser, à l'aide d'un ordre applicatif d'interrogation.

On va, à présent, décrire cette cession d'échanges selon l'invention.

Les trois ordres 7816-3 nécessaires à la réalisation des opérations décrites ci-dessus sont :
- Ecriture_applicative
   Cet ordre permet au terminal à lecteur de carte 10 de présenter à la carte 12 des acquittements ou des demandes d'interrogation applicatifs ;
- Lecture_applicative_TL
   Cet ordre permet de lire le type et la longueur de l'ordre applicatif à réaliser. Il est obligatoirement suivi de l'ordre lecture_applicative_V ;
- Lecture_applicative_V
   Cet ordre complète l'ordre précédent. Il permet de recueillir les données associées au type et à la longueur recueillis précédemment.

Les valeurs des ordres Ecriture_applicative, Lecture_applicative_TL et Lecture_applicative_V sont à normaliser entre les constructeurs de terminaux à lecteur de carte.

Les ordres et acquittements applicatifs sont liés à l'exploitation des ressources d'entrée-sortie du terminal à lecteur de carte 10. Ils se présentent au format TLV (Type, Longueur, Valeur) et peuvent prendre des contenus qu'il conviendra de définir entre constructeurs de terminaux à lecteur de carte.

Une application est un enchaînement d'ordres applicatifs entrants et sortants. On peut noter qu'elle commence toujours de la même façon, à l'aide d'un ordre applicatif d'interrogation. Elle se termine par un ordre applicatif de fin non acquitté.

Le champ d'application d'un tel enchaînement d'ordres est très vaste puisque l'on peut l'utiliser pour des terminaux à lecteur de carte connectés ou non à un centre distant de traitement de l'information, fixes ou mobiles, portables ou non.

Pour illustrer le propos, on va analyser le cas d'un téléphone à lecteur de carte accédant à un centre vocal de paris. Le cas présenté est simplifié volontairement pour pouvoir réduire les fonctionnalités du téléphone à lecteur de carte et de la carte à mémoire associée au service.

Le dialogue pour guider l'utilisateur se fait vocalement. Celui-ci peut, à l'aide des touches du clavier de son téléphone à lecteur de carte, faire parvenir des informations au serveur vocal sous forme DTMF (Dual Tone Multifrequency). Le téléphone à lecteur de carte peut émettre de lui-même des informations en provenance de la carte à mémoire sous des formats divers. Le téléphone à lecteur de carte doit être synchronisé avec l'application vocale qui se déroule sur le serveur vocal.

### Description du service

Un prestataire de services oeuvrant dans le domaine des paris propose à ses clients fidèles (qui possèdent une ligne de crédit chez lui) la possibilité de parier à l'aide d'un téléphone à lecteur de carte, fonctionnant en DTMF, auprès d'un serveur vocal. Pour affecter les gains de façon sûre, il a besoin d'identifier ses clients. De même, ses clients ont besoin de disposer d'une preuve sur leur engagement et leur pari. Le prestataire de services décide de leur fournir une carte à mémoire leur permettant de réaliser leurs paris avec les conditions décrites précédemment.

La carte à mémoire, pour pouvoir réaliser ses traitements, doit être couplée à un téléphone à lecteur de carte. Il est possible pour le prestataire de services de fournir avec la carte à mémoire, un téléphone à lecteur de carte dédié au service de pari ou d'utiliser un téléphone à lecteur de carte banalisé utilisant le système décrit précédemment.

### Mise en oeuvre

### Déroulement de l'opération

On suppose que l'appel au centre de paris se fait automatiquement. L'utilisateur décroche son combiné et introduit sa carte à mémoire dédiée au service dans le téléphone à lecteur de carte. Le téléphone à lecteur de carte lit le type d'application de la carte à mémoire, puis le cas échéant, enclenche le processus d'extraction de application de la carte à mémoire. La carte à mémoire à l'aide du système proposé pilote le téléphone à lecteur de carte pour composer le numéro téléphonique, pour émettre les données issues de la carte à mémoire nécessaires à la transaction en cours, pour réaliser quelques affichages sur l'écran du téléphone à lecteur de carte si celui-ci en est pourvu, pour réaliser les saisies nécessaires au calcul de sécurité nécessaires à la transaction en cours, etc... .

### Le téléphone à lecteur de carte

Le téléphone à lecteur de carte est pourvu du système d'extraction d'application et est capable d'exécuter un ensemble d'ordres applicatifs définis comme par exemple numérotation, émission d'un caractère DTMF, affichage d'un message à l'écran, saisie au clavier avec ou sans écho, brouillée ou non, etc...

### La carte à mémoire associée au service

La carte à mémoire dédiée à l'application contient, outre les données d'identification et ses secrets, l'automate de l'application qu'elle déroule de façon synchronisée avec le serveur vocal associé (en fait, elle pilote, par delà le téléphone à lecteur de carte, le serveur local) et accepte l'extraction de cet automate par le système décrit précédemment.

### Ordres TLV nécessaires à une telle session

On considère, dans le cas présenté, que le téléphone à lecteur de carte n'est pas équipé d'écran. La liste des ordres possibles, qui suit, est donnée à titre d'exemple :
- numérotation (numéro de téléphone) ;
- émission DTMF (numéros DTMF) ;
- acquittement (état acquitté) ;
- demande de saisie (type [brouillée ou non], nombre de caractères avant confirmation [#]);
- saisie (caractères) ;
- fin de session ( ).

### Déroulement de la session

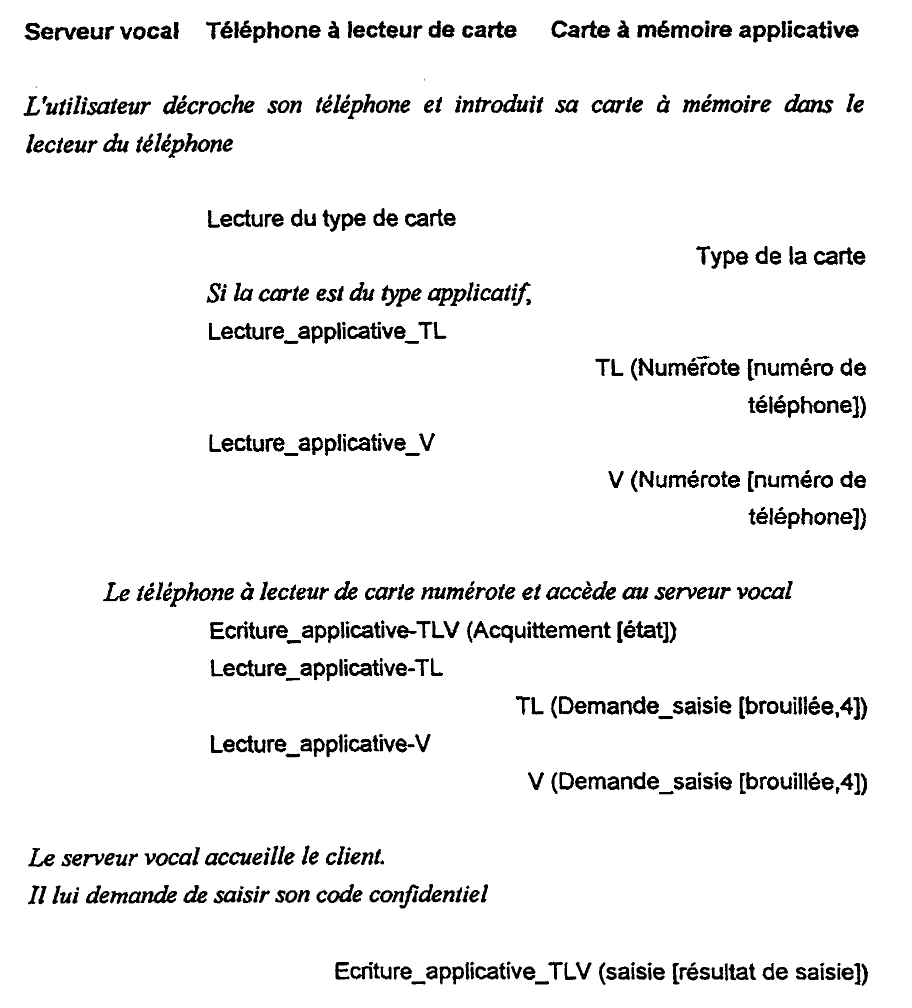

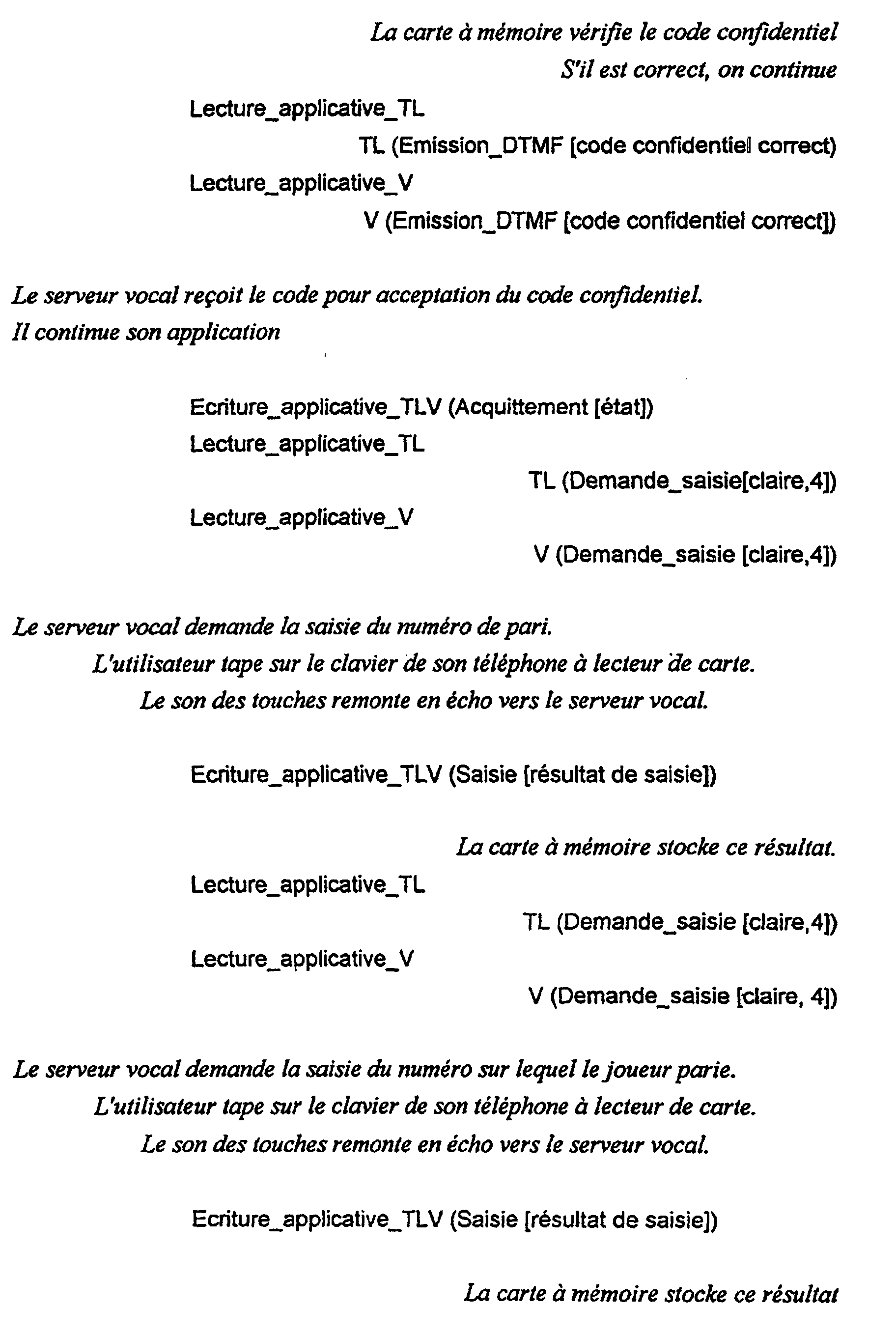

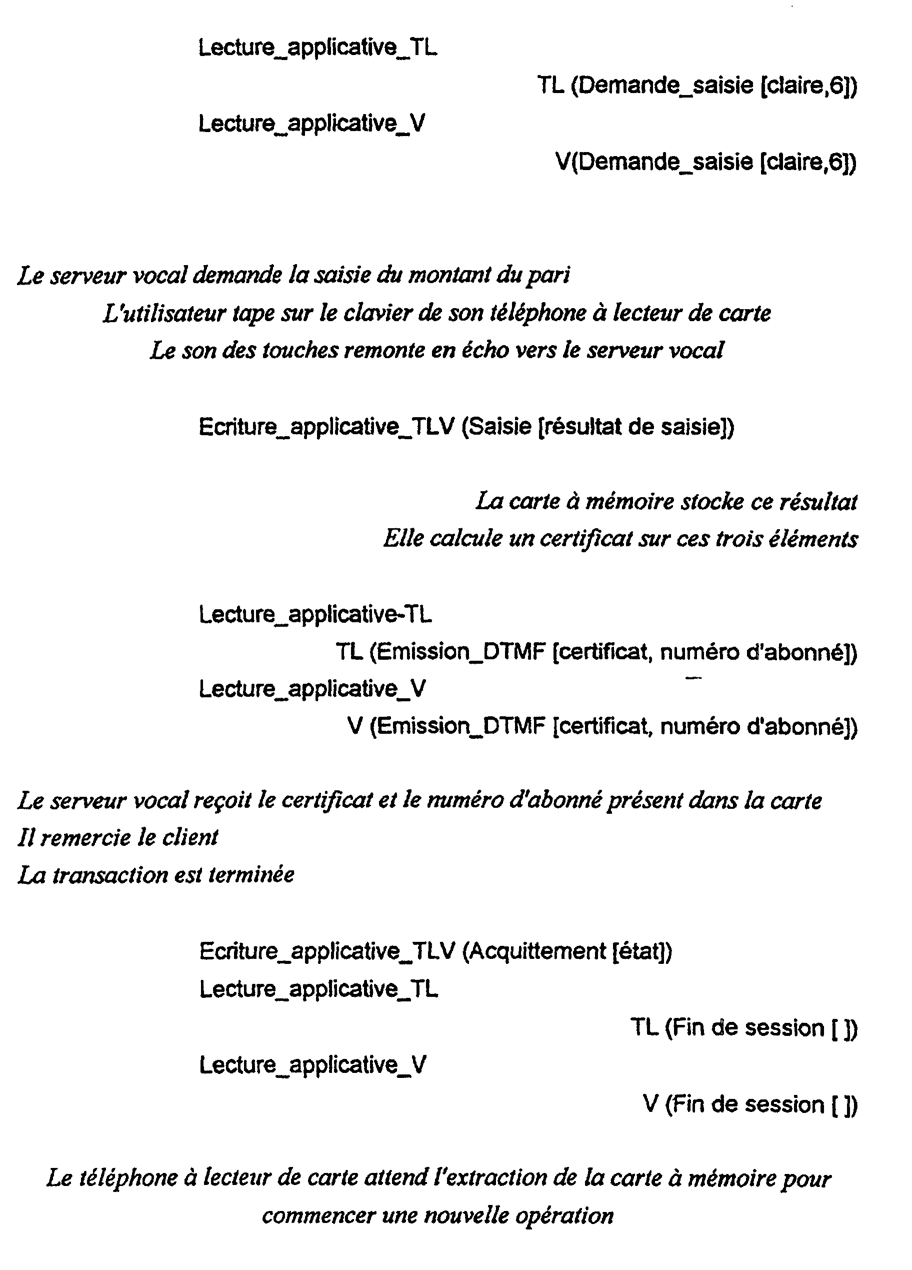

## Revendications

1. Procédé de traitement multi-applicatif d'un terminal à lecteur de cartes apte à exécuter plusieurs applications, dans lequel pour l'exécution d'une de ces applications on introduit dans ce terminal (10) une carte électronique (12) dédiée à au moins une de ces applications, une liaison étant ainsi réalisée entre la carte (12) et le terminal (10), **caractérisé en ce que** le terminal (10), établissant et contrôlant un dialogue avec la carte, devient esclave, au niveau de l'applicatif, vis-à-vis de la carte (12) dans laquelle s'exécute un programme lié à l'application pour la mise-à-disposition des entrées-sorties du terminal ainsi que de ses capacités, le terminal (10) interprète au moins un ordre applicatif reçu de la carte (12), réalise des opérations correspondantes, et les acquitte.

2. Procédé selon la revendication 1, **caractérisé en ce que** le terminal (10) établit et contrôle le dialogue en présentant à la carte électronique (12) un ordre d'interrogation, puis en récupérant un ordre applicatif à exécuter, et **en ce que** le terminal (10) interprète l'ordre applicatif, réalise les opérations y attenant et les acquitte.

3. Procédé selon la revendication 2, **caractérisé en ce que**, dans le cas où l'ordre applicatif nécessite une réponse du terminal, le terminal (10) présente à la carte électronique (12) un ordre entrant comprenant la réponse qui fait office d'ordre d'interrogation pour la prochaine action applicative à exécuter.

4. Procédé selon la revendication 2, **caractérisé en ce que**, dans le cas où l'ordre applicatif ne nécessite aucune réponse du terminal, le terminal (10) est toujours demandeur d'action applicative à réaliser à l'aide d'un ordre d'interrogation.

5. Procédé selon l'une des revendications précédentes, **caractérisé en ce que** les ordres applicatifs sont au format T (type), L (longueur), V (valeur).

6. Terminal à lecteur de cartes apte à exécuter plusieurs applications, dans lequel pour l'exécution d'une de ces applications est introduite une carte électronique (12) dédiée à au moins cette application, une liaison étant ainsi réalisée entre la carte (12) et le terminal (10), **caractérisé en ce qu'**il comprend des moyens pour établir et contrôler un dialogue avec la carte électronique, des moyens pour devenir esclave, au niveau de l'applicatif, vis-à-vis de la carte (12) dans laquelle s'exécute un programme lié à l'application, mettant ainsi à la disposition de la carte ses entrées-sorties ainsi que ses capacités, des moyens pour interpréter les ordres applicatifs reçus de la carte (12), des moyens pour réaliser les opérations correspondantes, et des moyens pour les acquitter.

7. Terminal selon la revendication 6, **caractérisé en ce qu'**il comprend des moyens pour établir et contrôler le dialogue en présentant à la carte électronique (12) un ordre d'interrogation et en récupérant un ordre applicatif à exécuter, et des moyens pour interpréter cet ordre applicatif, des moyens pour réaliser les opérations y attenant et des moyens pour les acquitter.

8. Terminal selon la revendication 7, **caractérisé en ce que**, dans le cas où l'ordre applicatif nécessite une réponse du terminal, il comprend des moyens pour présenter à la carte électronique (12) un ordre entrant comprenant la réponse qui fait office d'ordre d'interrogation pour la prochaine action applicative à exécuter.

9. Terminal selon la revendication 7, **caractérisé en ce que**, dans le cas où l'ordre applicatif ne nécessite aucune réponse du terminal, il comprend des moyens pour être demandeur d'action applicative à réaliser à l'aide d'un ordre d'interrogation.

10. Terminal selon l'une des revendications 6 à 9, **caractérisé en ce que** les ordres applicatifs sont au format T (type), L (longueur), V (valeur) .

11. Terminal selon l'une des revendications 6 à 10, **caractérisé en ce qu'**il comprend une unité centrale (15) reliée à plusieurs ensembles périphériques dont un lecteur de carte (22).

12. Terminal selon l'une des revendications 6 à 11, **caractérisé en ce que** ces ensembles périphériques comprennent un des éléments suivants : un fichier (16), un clavier (17), un modem (18), un émetteur DTMF, un afficheur (21).

13. Carte électronique (12) dédiée à l'exécution d'au moins une application, une liaison étant réalisée entre la carte (12) et le terminal (10), **caractérisée en ce que** la carte dans laquelle s'exécute un programme lié à l'application, comprend des moyens pour accepter un dialogue établi et contrôlé par le terminal, des moyens pour devenir maître, au niveau de l'applicatif, vis-à-vis du terminal (10) afin que ce dernier mette ses entrées-sorties ainsi que ses capacités à disposition de la carte, des moyens pour émettre des ordres applicatifs vers le terminal et des moyens pour recevoir du terminal les acquittements de ces ordres applicatifs.

14. Carte selon la revendication 13, **caractérisée en ce qu'**elle comprend des moyens pour recevoir du terminal (10) un ordre d'interrogation, des moyens pour émettre un ordre applicatif à exécuter, et des moyens pour recevoir un acquittement de cette exécution.

15. Carte selon la revendication 14, **caractérisée en ce que**, dans le cas où l'ordre applicatif nécessite une réponse du terminal, la carte comprend des moyens pour recevoir du terminal (10) un ordre entrant comprenant la réponse du terminal qui fait office d'ordre d'interrogation pour la prochaine action applicative à exécuter.

16. Carte selon la revendication 14, **caractérisée en ce que** dans le cas où l'ordre applicatif ne nécessite aucune réponse du terminal, la carte comprend des moyens pour transmettre au terminal (10) un ordre applicatif à la suite d'un ordre d'interrogation.

17. Carte selon l'une des revendications 13 à 16, **caractérisée en ce que** les ordres applicatifs sont au format T (type), L (longueur), V (valeur).

18. Carte selon l'une des revendications 13 à 17, **caractérisé en ce qu'**elle est une carte à mémoire comprenant au moins un microprocesseur.

## Patentansprüche

1. Verfahren zur Verarbeitung mehrerer Anwendungen eines Kartenleser-Terminals, das geeignet ist, mehrere Anwendungen auszuführen, in welchem für die Ausführung einer dieser Anwendungen in dieses Terminal eine elektronische Karte (12) eingeführt wird, die wenigstens einer dieser Anwendungen zugewiesen ist, wobei auf diese Weise eine Verbindung zwischen der Karte (12) und dem Terminal (10) realisiert ist, **dadurch gekennzeichnet, dass** das Terminal (10)einen Dialog mit der Karte einrichtet und kontrolliert, auf Anwendungsniveau zum Sklaven gegenüber der Karte (12) wird, in welcher ein mit der Anwendung verbundenes Programm ausgeführt wird, um Ein-Ausgänge des Terminals, sowie dessen Kapazitäten zur Verfügung zu stellen, das Terminal (10) wenigstens einen von der Karte (12) empfangenen Anwendungsbefehl interpretiert, zugehörige Funktionen realisiert, und diese bestätigt.

2. Verfahren nach Anspruch 1, **dadurch gekennzeichnet, dass** das Terminal (10) den Dialog einrichtet und kontrolliert, indem der elektronischen Karte (12) ein Abfragebefehl präsentiert wird und dann einen auszuführenden Anwendungsbefehl zurückbekommt, und dass das Terminal (10) den Anwendungsbefehl interpretiert, die dort bereit stehenden Funktionen realisiert und diese bestätigt.

3. Verfahren nach Anspruch 2, **dadurch gekennzeichnet, dass** in dem Fall, wo der Anwendungsbefehl eine Antwort des Terminals erfordert, das Terminal (10) der elektronischen Karte (12) einen Eingangsbefehl präsentiert, der die Antwort umfasst, welche als Abfragebefehl für die auszuführende nächste Aktion dient.

4. Verfahren nach Anspruch 2, **dadurch gekennzeichnet, dass** in dem Fall, wo der Anwendungsbefehl keine Antwort des Terminals erfordert, das Terminal (10) immer der Anforderer der mithilfe eines Abfragebefehls zu realisierenden Anwendungsaktion ist.

5. Verfahren nach einem der vorherigen Ansprüche, **dadurch gekennzeichnet, dass** die Anwendungsbefehle im Format T (Typ), L (Länge), V (Wert) vorliegen.

6. Kartenleser-Terminal, das geeignet ist, mehrere Anwendungen auszuführen, in welches für die Ausführung einer dieser Anwendungen eine elektronische Karte (12) eingeführt wird, die wenigstens einer dieser Anwendungen zugewiesen ist, wobei auf diese Weise eine Verbindung zwischen der Karte (12) und dem Terminal (10) realisiert ist, **dadurch gekennzeichnet, dass** es Mittel um einen Dialog mit der elektronischen Karte einzurichten und zu kontrollieren, Mittel um auf Anwendungsniveau zum Sklaven gegenüber der Karte (12) zu werden, in welcher ein mit der Anwendung verbundenes Programm ausgeführt wird, um Ein-Ausgänge des Terminals, sowie dessen Kapazitäten der Karte zur Verfügung zu stellen, Mittel um die von der Karte (12) empfangenen Anwendungsbefehle zu interpretieren, Mittel um die zugehörigen Funktionen zu realisieren, und Mittel um diese zu bestätigen, umfasst.

7. Terminal nach Anspruch 6, **dadurch gekennzeichnet, dass** es Mittel zum Einrichten und Kontrollieren des Dialogs, indem der elektronischen Karte (12) ein Abfragebefehl präsentiert wird und dann einen auszuführenden Anwendungsbefehl zurückbekommt, Mittel um diesen Anwendungsbefehl zu interpretieren, Mittel um die dort bereit stehenden Funktionen zu realisieren und Mittel um diese zu bestätigen, umfasst.

8. Terminal nach Anspruch 7, **dadurch gekennzeichnet, dass** in dem Fall, wo der Anwendungsbefehl eine Antwort des Terminals erfordert, es Mittel um der elektronischen Karte (12) einen Eingangsbefehl zu präsentieren, der die Antwort umfasst, welche als Abfragebefehl für die auszuführende nächste Aktion dient, umfasst.

9. Terminal nach Anspruch 7, **dadurch gekennzeichnet, dass** in dem Fall, wo der Anwendungsbefehl keine Antwort des Terminals erfordert, es Mittel, um der Anforderer der mithilfe eines Abfragebefehls zu realisierenden Anwendungsaktion zu sein, umfasst.

10. Terminal nach einem der Ansprüche 6 bis 9, **dadurch gekennzeichnet, dass** die Anwendungsbefehle im Format T (Typ), L (Länge), V (Wert) vorliegen.

11. Terminal nach einem der Ansprüche 6 bis 10, **dadurch gekennzeichnet, dass** es eine mit mehreren peripheren Einheiten, darunter ein Kartenleser (22), verbundene Zentraleinheit (15) umfasst.

12. Terminal nach einem der Ansprüche 6 bis 11, **dadurch gekennzeichnet, dass** diese peripheren Einheiten eines der folgenden Elemente umfassen: ein Register (16), eine Tastatur (17), ein Modem (18), einen DTMF-Sender, eine Anzeige (21).

13. Elektronische Karte (12), welche der Ausführung wenigstens einer Anwendung zugewiesen ist, wobei eine Verbindung zwischen der Karte (12) und dem Terminal (10) realisiert ist, **dadurch gekennzeichnet, dass** die Karte, in welcher ein mit der Anwendung verbundenes Programm abläuft, Mittel um einen durch das Terminal eingerichteten und kontrollierten Dialog zu akzeptieren, Mittel um auf Anwendungsniveau gegenüber dem Terminal (10) Meister zu werden, damit dieses seine Ein-Ausgänge sowie seine Kapazitäten der Karte zur Verfügung stellt, Mittel um Anwendungsbefehle zum Terminal zu senden und Mittel um vom Terminal die Bestätigungen dieser Anwendungsbefehle zu empfangen, umfasst.

14. Karte nach Anspruch 13, **dadurch gekennzeichnet, dass** sie Mittel um vom Terminal (10) einen Abfragebefehl aufzunehmen, Mittel um einen auszuführenden Anwendungsbefehl auszusenden, und Mittel um eine Bestätigung dieser Ausführung zu empfangen, umfasst.

15. Karte nach Anspruch 14, **dadurch gekennzeichnet, dass** in dem Fall, wo der Anwendungsbefehl eine Antwort des Terminals erfordert, die Karte Mittel umfasst, um vom Terminal (10) einen Eingangsbefehl mit der Antwort des Terminals, die als Abfragebefehl für die auszuführende nächste Anwendungsaktion dient, zu empfangen.

16. Karte nach Anspruch 14, **dadurch gekennzeichnet, dass** in dem Fall, wo der Anwendungsbefehl keine Antwort des Terminals erfordert, die Karte Mittel umfasst, um an das Terminal (10) einen Anwendungsbefehl nach einem Abfragebefehl zu übertragen.

17. Karte nach einem der Ansprüche 13 bis 16, **dadurch gekennzeichnet, dass** die Anwendungsbefehle im Format T (Typ), L (Länge), V (Wert) vorliegen.

18. Karte nach einem der Ansprüche 13 bis 17, **dadurch gekennzeichnet, dass** sie eine Speicherkarte mit wenigstens einem Mikroprozessor ist.

## Claims

1. Multi-application processing method of a card reader terminal able to execute a plurality of applications, wherein, for the execution of one of said applications, there is inserted into said terminal (10) an electronic card (12) dedicated to at least one of these applications, a link being formed in said way between the card (12) and the terminal (10), **characterised in that** the terminal (10), establishing and controlling a dialogue with the card, becomes a slave, at the level of the application, to the card (12), in which there is executed a program linked to the application for making available the inputs-outputs of the terminal and its capacities, the terminal (10) interprets at least one application instruction received from the card (12), performs corresponding operations, and acknowledges them.

2. Method according to claim 1, **characterised in that** the terminal (10) establishes and controls the dialogue by presenting an interrogation instruction to the electronic card (12) and then recovering an application instruction to be executed, and **in that** the terminal (10) interprets the application instruction, performs the operations relevant thereto and acknowledges them.

3. Method according to claim 2, **characterised in that**, if the application instruction necessitates a response from the terminal, the terminal (10) presents to the electronic card (12) an incoming instruction comprising the response that serves as an interrogation instruction for the next application action to be performed.

4. Method according to claim 2, **characterised in that**, if the application instruction does not necessitate any response from the terminal, the terminal (10) always requests the application action to be performed with the aid of an interrogation instruction.

5. Method according to any one of the preceding claims, **characterised in that** the application instructions are to the T (type), L (length), V (value) format.

6. Card reader terminal adapted to execute a plurality of applications, in which, for the execution of one of said applications, there is inserted an electronic card (12) dedicated to at least said application, a connection being formed in this way between the card (12) and the terminal (10), **characterised in that** it comprises means for establishing and monitoring a dialogue with the electronic card, means for becoming a slave, at the level of the application, to the card (12), in which there is executed a program linked to the application, thereby making available to the card its inputs-outputs and its capacities, means for interpreting application instructions received from the card (12), means for performing the corresponding operations, and means for acknowledging them.

7. Terminal according to claim 6, **characterised in that** it comprises means for establishing and monitoring the dialogue by presenting to the electronic card (12) an interrogation instruction and recovering an application instruction to be executed and means for interpreting said application instruction, means for performing the operations relevant thereto and means for acknowledging them.

8. Terminal according to claim 7, **characterised in that**, if the application instruction necessitates a response from the terminal, it comprises means for presenting to the electronic card (12) an incoming instruction comprising the response that serves as an interrogation instruction for the next application action to be performed.

9. Terminal according to claim 7, **characterised in that**, if the application instruction does not necessitate any response from the terminal, it comprises means for requesting the application action to be performed with the aid of an interrogation instruction.

10. Terminal according to any one of claims 6 to 9, **characterised in that** the application instructions are to the T (type), L (length), V (value) format.

11. Terminal according to any one of claims 6 to 10, **characterised in that** it comprises a central unit (15) connected to a plurality of peripheral systems including a card reader (22).

12. Terminal according to any one of claims 6 to 11, **characterised in that** said peripheral systems comprise one of the following: a file (16), a keypad (17), a modem (18), a DTMF sender, a display (21).

13. Electronic card (12) dedicated to the execution of at least one application, a connection being formed between the card (12) and the [sic] terminal (10), **characterised in that** the card, in which there is executed a program linked to the application, comprises means for accepting a dialogue established and monitored by the terminal, means for becoming master, at the level of the application, of the terminal (10) in order for the latter to makes its inputs-outputs and its capacities available to the card, means for sending application instructions to the terminal and means for receiving acknowledgements of said application instructions from the terminal.

14. Card according to claim 13, **characterised in that** it comprises means for receiving an interrogation instruction from the terminal (10), means for sending an application instruction to be executed, and means for receiving an execution acknowledgement.

15. Card according to claim 14, **characterised in that**, if the application instruction necessitates a response from the terminal, the card comprises means for receiving from the terminal (10) an incoming instruction comprising the response from the terminal that serves as an interrogation instruction for the next application action to be performed.

16. Card according to claim 14, **characterised in that**, if the application instruction does not necessitate any response from the terminal, the card comprises means for sending to the terminal (10) an application instruction after an interrogation instruction.

17. Card according to any one of claims 13 to 16, **characterised in that** the application instructions are to the T (type), L (length), V (value) format.

18. Card according to any one of claims 13 to 17, **characterised in that** it is a memory card comprising at least one microprocessor.
